# EUROPEAN PATENT APPLICATION

(11) **EP 1 643 503 A2**
(43) Date of publication of application: **05.04.2006**
(21) Application number: 05256058.8
(22) Date of filing: 28.09.2005
(51) Int. Cl.: G11B 25/04, G11B 33/02, G11B 25/10, G11B 33/14

(54) **Combination recorder/player**

(30) Priority: 30.09.2004 JP 2004287645
(71) Applicant: ORION ELECTRIC CO., Ltd., Takefu-City, Fukui 915-8555 (JP)
(72) Inventor: Kunimoto, Kazunori, Orion Electric Co., Ltd., Takefu-city Fukui 915-8555 (JP)
(74) Representative: Paget, Hugh Charles Edward

(57) **Abstract**

The invention provides a combination recorder/player equipped with three recording/playback functions of a VCR unit, DVD unit, and HDD unit almost equal to exterior size of a conventional combination recorder/player equipped with two recording/playback functions of a VCR unit and DVD unit. In an enclosure 3, a VCR unit 4 is placed in an upper left front part, a DVD unit 5 is placed in an upper right front part, an HDD unit 6 is placed sideways in a lower right rear part with a flank facing the front and with the HDD unit 6 being separated from the enclosure's bottom face 7 by a gap; and the HDD unit 6 and the DVD unit 5 face each other vertically at some distance with the front end of the HDD unit 6 located ahead of the rear end of the DVD unit 5.

## Description

### BACKGROUND OF THE INVENTION

### Field of the Invention

The present invention relates to a combination recorder/player housing at least two types of recorder/player--a DVD unit (Digital Versatile Disk unit), and HDD unit (Hard Disk Drive unit)--in a single body and capable of operating them in combination, in which the combination recorder/player can keep its exterior size almost equal to that of a conventional combination recorder/player which houses two types of recorder/player--a VCR unit and DVD unit--in a single body, instead of increasing it greatly.

### Description of the Related Art

Also, the present invention relates to a combination recorder/player which makes it possible to install its parts easily, prevent wiring problems, and dissipate heat efficiently.

Since the present invention is concerned with laying out various units and parts in an apparatus efficiently, their positional relationships will be described herein using terms "front/rear direction", "left/right direction", and "up/down direction". These directions are defined as follows: when the combination recorder/player is left at rest in normal operating conditions, the side which faces the user is designated as the "front", the left and right direction for the user facing the apparatus corresponds to the "left and right" direction of the apparatus, and the top and down direction for the user facing the apparatus corresponds to the "top and down" direction of the apparatus.

Conventional combination recorders/players are generally equipped with two types of recorder/player: for example, a VCR unit and DVD unit. Main parts contained in their enclosure are the VCR unit and DVD unit (e.g., DVD-RW (Digital Versatile Disk Rewritable) loader). Other parts include an analog signal processing board, a digital signal processing board (MPEG (Moving Picture Experts Group) board), and a PCB power board.

In this way, there are many conventionally known examples of combination recorders/players equipped with two types of recorder/player.

For example, Japanese Patent Laid-Open Publication No. 8-106762 (Patent Document 1) discloses a combination recorder/player which houses a tape drive and disk drive in a single body, characterized in that: a loading slots for insertion of a cassette tape and optical disk as well as the tape drive and disk drive are provided in/on a front face of the body; the tape drive has a tape recorder deck equipped with a transport system including a head drum and a holder for holding tape to the tape recorder deck in a stable manner; and the disk drive has a disk tray, a disk deck located behind the tape drive, disk tray transport means comprising a gear train formed on the disk deck and the body and a rack formed on the disk tray and engaged with the gear train, and a disk deck turning means which is coupled turnably in the body and moves the disk deck to a loading position.

Japanese Patent Laid-Open Publication No. 10-222973 (Patent Document 2) discloses an invention intended to provide a video recorder/player which incorporates two tape decks and allows a user to check whether each of the deck is operating even when a lid is closed. The video recorder/player which incorporates two tape decks comprises a base equipped with a control panel for use to control operation of the tape decks; a lid body which mates with the base, opens and closes with respect to the base, and has a display device that appears when the lid is opened, but hides itself when the lid is closed; and a display which is provided on at least one of the base and lid body and indicates operating state of the two tape decks.

Japanese Patent Laid-Open Publication No. 2002-8361 (Patent Document 3) discloses an invention intended to improve soundproofing effect of a video signal recording and/or playback apparatus which incorporates a hard disk drive. This arrangement involves fastening the hard disk drive to a mounting base in an enclosure of the apparatus, fastening the mounting base to a lower circuit board at a required distance via legs, and supporting an upper circuit board at a required distance from the top of the hard disk drive by a supporting member.

Japanese Patent Laid-Open Publication No. 2003-288771 (Patent Document 4) discloses an invention intended to provide a low-cost, double-deck type audio apparatus in which circuits and the like are shared and which allows a disk to be played back directly after recording. The twin-deck type audio apparatus for disk recording and playback comprises a dedicated playback deck; and a dedicated recording deck, characterized in that: a decoding circuit for the dedicated playback deck and an encoding circuit for the dedicated recording deck are integrated into a single encoding/decoding circuit, and a mechanism is provided to alternate locations of a disk tray for use to mount a disk for the dedicated playback deck and a disk tray for the dedicated recording deck.

Japanese Patent Laid-Open Publication No. 2004-134017 (Patent Document 5) discloses an invention intended to reduce effect of noise produced by drive mechanisms on a combination audio-video recorder/player which incorporates a DVD unit and a video cassette unit in a single enclosure without a shield plate. The combination audio-video recorder/player is characterized in that a double-sided substrate with a DVD drive mechanism and video drive mechanism mounted is placed between a video cassette deck and a bottom panel of the enclosure, and the DVD drive mechanism is placed below the video cassette deck, being surrounded by a metal chassis of the video cassette deck and the metal bottom panel of the enclosure, and is thus electromagnetically shielded. Consequently, noise produced by the DVD drive mechanism is shielded and kept from affecting the video cassette deck.

Regarding an apparatus equipped with three drive units, Japanese Patent Laid-Open Publication No. 11-284938 (Patent Document 6) discloses an invention which provides an image pickup apparatus equipped with a plurality of recording/playback units as well as provides the recording/playback units. The image pickup apparatus is capable of easily performing various types of image processing including backup recording and long continuous recording of image signals on the recording/playback units including image pickup means. The image pickup apparatus equipped with a plurality of recording/playback units is characterized in that: three drive units are removably mounted on a main body; a control section which includes a camera head, a CCU, a system controller, and the like are mounted on one side of the main body; a camera lens is further mounted on the control section; and the image pickup apparatus is capable of various recording/playback/editing processes including parallel recording which involves simultaneously recording an image signal picked up by a camera head on a plurality of drive units, series recording which involves recording the image signal on the plurality of drive units in sequence, and editing/recording among the drive units.

Japanese Patent Laid-Open Publication No. 11-297057 (Patent Document 7) discloses an invention that provides a recording/playback apparatus and recording/playback method which can reduce the size of a main control section by allowing a user to mount and dismount a recording/playback deck on/from the main control section and to select a desired recording medium for recording or playback. The recording/playback apparatus has a recording/playback deck which performs mechanical and electrical operations in order to load a recording medium for recording or playback through a slot; and a main control section which has a mounting port for use to mount and dismount the recording/playback deck with one-touch operation, controls power supply to the recording/playback deck, and controls the recording/playback deck for recording and playback. A plurality of recording/playback decks are available to accommodate different recording media and the user can select a desired recording medium for recording or playback by mounting a desired recording/playback deck on the mounting port with one-touch operation.

Japanese Patent Laid-Open Publication No. 2004-134000 (Patent Document 8) discloses an invention which makes it possible to separate and integrate a plurality of drives on a video deck easily without wiring changes, where the drives are capable of operating independently. With this invention, it is possible to connect detachable data bus connectors of different drives, thereby connecting the drives with each other to exchange data with a common external apparatus connected to either an interface and selector or interface of one of the drives; disconnect the data bus connectors conversely, thereby separating the drives to exchange data independently with respective external apparatus; connect the data bus connector of a drive directly with a video terminal of a video display monitor to visually display content of a recording medium mounted on the drive; and permit only playback and inhibit recording and deletion on separated drives, thereby allowing the separated drives and recording media to be lent safely to other people.

As described above, there are known combination recorders/players equipped with a plurality of drive units. When configuring a combination recorder/player equipped with a VCR unit, DVD unit, and HDD unit by adding an HDD unit to a conventional combination recorder/player equipped with a VCR unit and DVD unit, it is necessary to expand the width or depth of an enclosure to provide a space for the HDD unit, thereby increasing the size of the enclosure accordingly, and thus it is not possible to keep the exterior size of the new combination recorder/player almost equal to that of the conventional combination recorder/player equipped with two units--the VCR unit and DVD unit.

Therefore, manufacturers must produce enclosures and assemble parts on production lines different from conventional ones and cannot use conventional manufacturing processes as they are. Consequently, when a user buys a combination recorder/player equipped with three recording/playback functions of a VCR unit, DVD unit, and HDD unit to replace a combination recorder/player equipped with a VCR unit and DVD unit, there is a risk that the user cannot reuse an existing rack or the like to house the new apparatus.

### SUMMARY OF THE INVENTION

The present invention has an object to provide a combination recorder/player equipped with at least two recording/playback functions of a DVD unit, and HDD unit, which can solve the above problems using a novel configuration.

Claim 1 of the present invention sets forth a combination recorder/player equipped with at least two recording/playback functions of a DVD unit, and HDD unit, characterized in that: a DVD disk loading/ejection slot is provided in an upper part of the front face; the DVD unit is placed in an enclosure which constitutes an outer casing of the recorder/player; the HDD unit is placed sideways in a lower rear part with a flank facing the front and with the HDD unit being separated from an enclosure bottom by a gap; and the HDD unit and the DVD unit face each other vertically at some distance, partially overlapping each other with a front end of the HDD unit located ahead of a rear end of the DVD unit.

The combination recorder/player set forth in claim 2 of the present invention is characterized in that: a digital signal processing board is placed below the DVD unit, being separated by a gap; a PCB power board is placed above the HDD unit, being separated by a gap; and the digital signal processing board and the HDD unit as well as the DVD unit and the PCB power board stay clear of each other, being separated by gaps.

The combination recorder/player set forth in claim 3 of the present invention is characterized in that: the DVD unit and the digital signal processing board are supported together and fastened to the enclosure by a supporting member; and the HDD unit and the PCB power board are supported together and fastened to the enclosure by another supporting member.

The combination recorder/player set forth in claim 4 of the present invention is characterized in that: an analog signal processing board is placed in the enclosure; the PCB power board is connected with the analog signal processing board, the DVD unit, and the HDD unit by respective power wiring; the digital signal processing board is connected with the analog signal processing board, the DVD unit, and the HDD unit by respective signal wiring; adjacent ones of the units are connected by respective wiring in a short distance; and an intermediate part of any wiring does not touch the DVD unit.

The combination recorder/player set forth in claim 5 of the present invention is characterized in that: vents which communicate the inside of the enclosure with outside air are installed at least in a front part of the flank and a back face of the enclosure; and the vent in the back face is outfitted with an exhaust fan.

### BRIEF DESCRIPTION OF THE DRAWINGS

FIG. 1 is a front view showing an internal structure of a combination recorder/player according to the present invention.
FIG. 2 is a plan view showing the internal structure of the combination recorder/player according to the present invention.
FIG. 3 is a left side view of the internal structure of the combination recorder/player according to the present invention.
FIG. 4 is a right side view of the internal structure of the combination recorder/player according to the present invention.
FIG. 5 is an explanatory diagram illustrating main component units of the combination recorder/player according to the present invention.
FIG. 6 is a plan view showing an internal structure to illustrate circumstances leading to the present invention.
FIG. 7 is a left side view showing the internal structure to illustrate the circumstances leading to the present invention.
FIG. 8 is a right side view showing the internal structure to illustrate the circumstances leading to the present invention.

### DETAILED DESCRIPTION OF THE PREFERRED EMBODIMENTS

An example of the best mode for implementing a combination recorder/player equipped with three recording/playback functions of a VCR unit, DVD unit, and HDD unit as a recorder according to the present invention will be described below with reference to the drawings, but it goes without saying that the present invention is not limited to this embodiment.

In terms of unit configuration, the recorder/player according to the present invention can be regarded as a conventional combination recorder/player equipped with two recording/playback functions of a VCR unit and DVD unit plus an HDD unit.

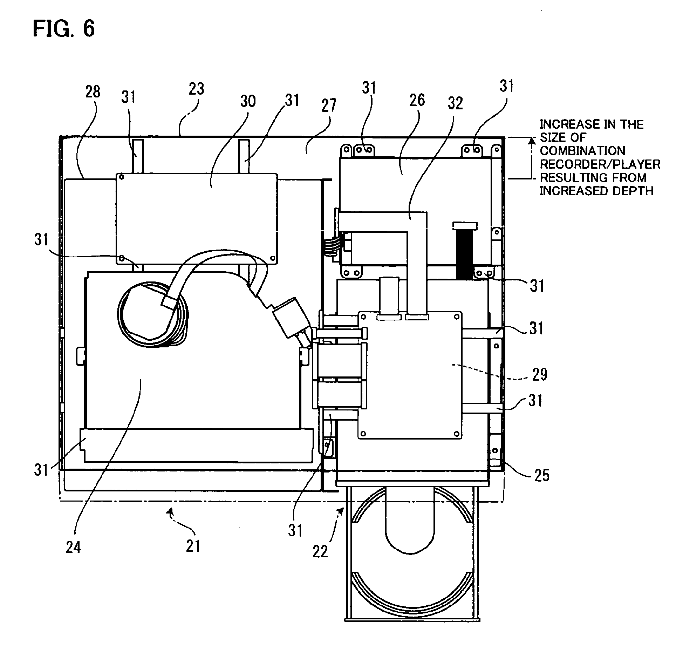

Now, with reference to FIGS. 6 to 8, description will be given of a conventional technique for configuring a combination recorder/player equipped with three recording/playback functions of a VCR unit, DVD unit, and HDD unit as in the case of the present invention by adding an HDD unit to a combination recorder/player equipped with two recording/playback functions of a VCR unit and DVD unit. The present inventors initially tried to configure a combination recorder/player equipped with three recording/playback functions of a VCR unit, DVD unit, and HDD unit by adding an HDD unit to a combination recorder/player equipped with two recording/playback functions of a VCR unit and DVD unit in this way. Although this technique does not constitute the present invention, it is an intermediary process needed to facilitate the understanding of the present invention. Since the present invention does not consists in parts layout on substrates, detailed parts layout is not shown in the figures.

To outline the circumstances leading to the present invention, planar layout of units is shown in FIG. 6. This is a plan view of an internal structure as the apparatus is viewed from above. Generally a VCR unit 24 which is the largest unit is placed in left front part and an analog signal processing board 28 is placed below it. As can be seen from the figure, although the units are laid out as densely as possible in a planar fashion, a large number of supporting members 31 are used because the units are supported individually. Besides, power wiring and signal wiring 32 are rather long.

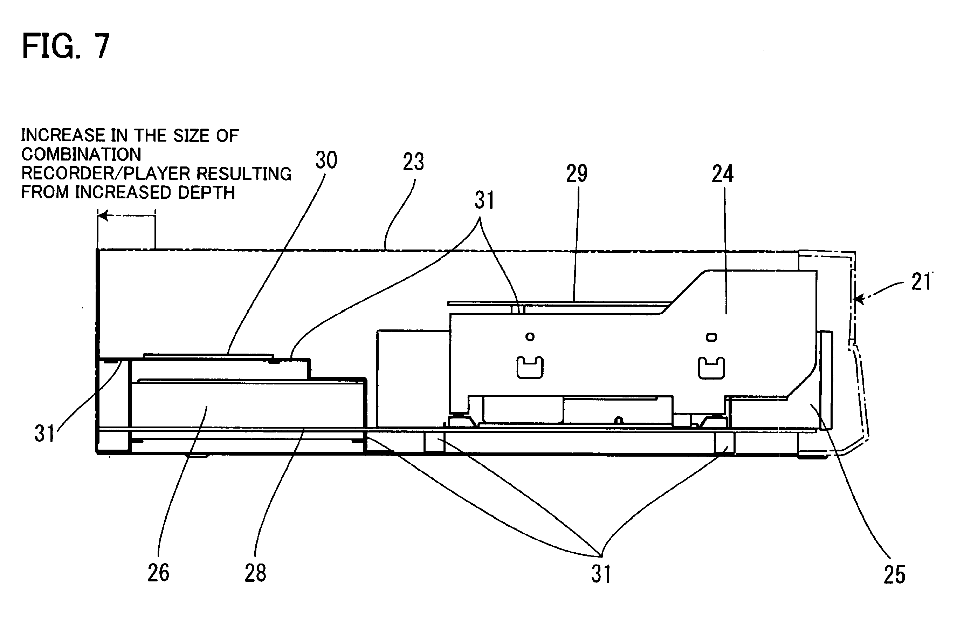

FIG. 7 is a left side view of an internal structure of the apparatus shown in FIG. 6. As shown in the figure, a PCB power board 30 is placed behind the VCR unit 24. The analog signal processing board 28, a DVD unit 25, a digital signal processing board 29, and the PCB power board 30 are fastened in an enclosure 23 by different supporting members 31.

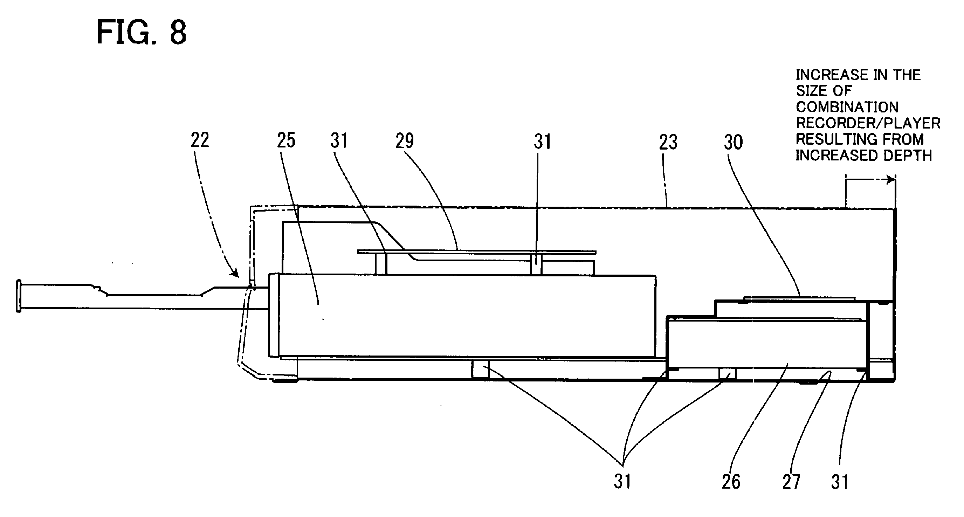

FIG. 8 is a right side view of the internal structure of the apparatus shown in FIG. 6. As shown in the figure, a HDD unit 26 is fastened to the enclosure's bottom face 27 behind the DVD unit 25 by supporting members 31.

In this way, the methods which involves fastening individual units with independent supporting members 31 increases the number of supporting members 31. Also, if the HDD unit 26 is added simply in a planar fashion to a combination recorder/player equipped with two recording/playback functions of the VCR unit 24 and DVD unit 25 as described above, the area required is increased simply and extra supporting members must be used at least to fasten the HDD unit 26 to the enclosure. This increases parts count, hindering weight reduction, increasing the number of assembly processes, and increasing assembly time accordingly.

With a configuration in which the PCB power board 30 is placed on the left side, power wiring and signal wiring 32 between a power circuit and the units become long, and consequently they may touch the DVD unit 25 and get broken by sliding of a tray. In particular, if the digital signal processing board 29 is installed above the DVD unit 25, the power wiring or signal wiring connected to the digital signal processing board 29 will touch the DVD unit 25 itself.

Next, a problem of heat generation in an apparatus such as the one described above will be discussed. Naturally, each unit generates heats, but intense heat is generated mainly by the PCB power board 30 and digital signal processing board 29. A combination recorder/player equipped with three recording/playback functions of a VCR unit, DVD unit, and HDD unit as in this example consumes extra power for the HDD unit 26 added. Also, dense layout of units and parts reduces space available for heat dissipation among parts, and consequently heat tends to build up in the apparatus. Moreover, if heat sources are laid out in a distributed manner, for example, with the digital signal processing board 29 placed on the right side and the PCB power board 30 placed on the left side, it is difficult to create air flow in the apparatus even with a fan, and thus it is impossible to cool the apparatus efficiently. This is because the number of units and parts is increased, making internal structure complex, the units and parts are crowded thickly, obstructing air flow, main heat sources are spaced apart from each other, and so on.

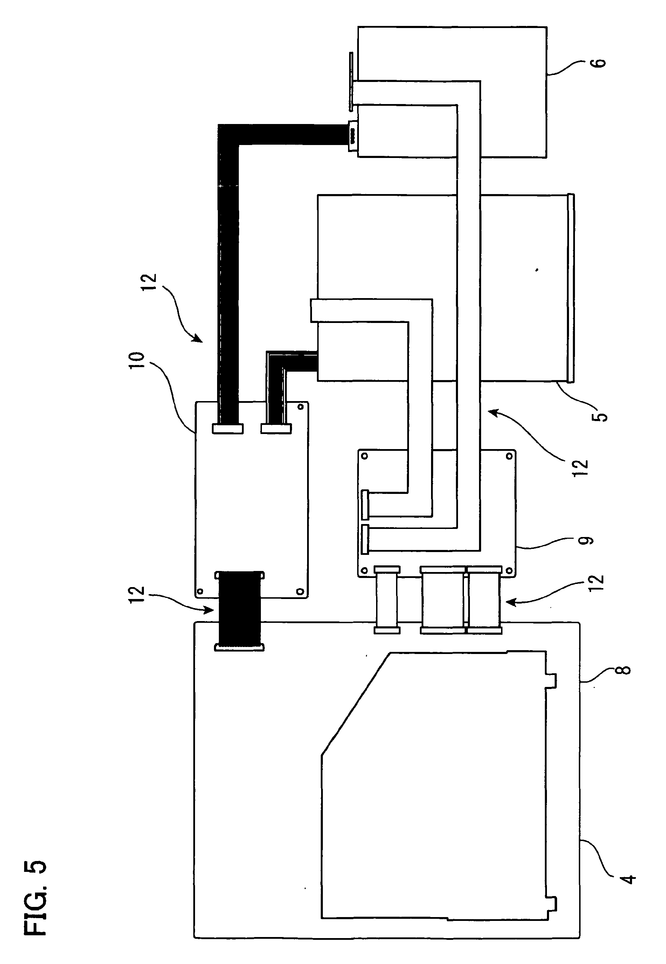

The best embodiment of the present invention devised under the above circumstances will be described now. FIG. 5 shows planar wiring connections of a main unit and parts of a combination recorder/player equipped with three recording/playback functions of a VCR unit 4, DVD unit 5, and HDD unit 6. The VCR unit 4 is mounted on an analog signal processing board 8 and connected with a digital signal processing board (MPEG board) 9 via power wiring, video/audio input/output wiring, and timer-microcomputer communications wiring 12. The DVD unit 5 and HDD unit 6 are connected to the digital signal processing board (MPEG board) 9 via respective wiring 12 of a digital signal line. The VCR unit 4, DVD unit 5, and HDD unit 6 are supplied with power from a PCB power board 10 via respective wiring 12.

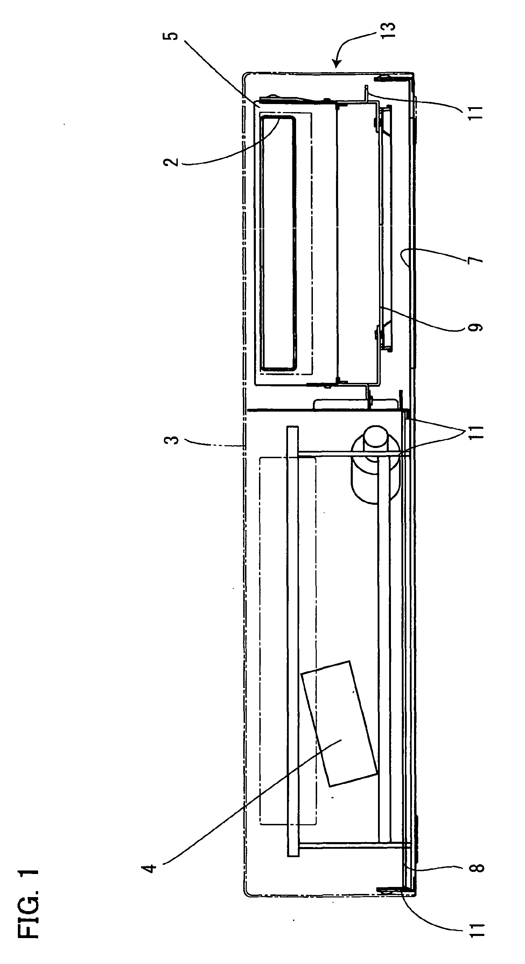

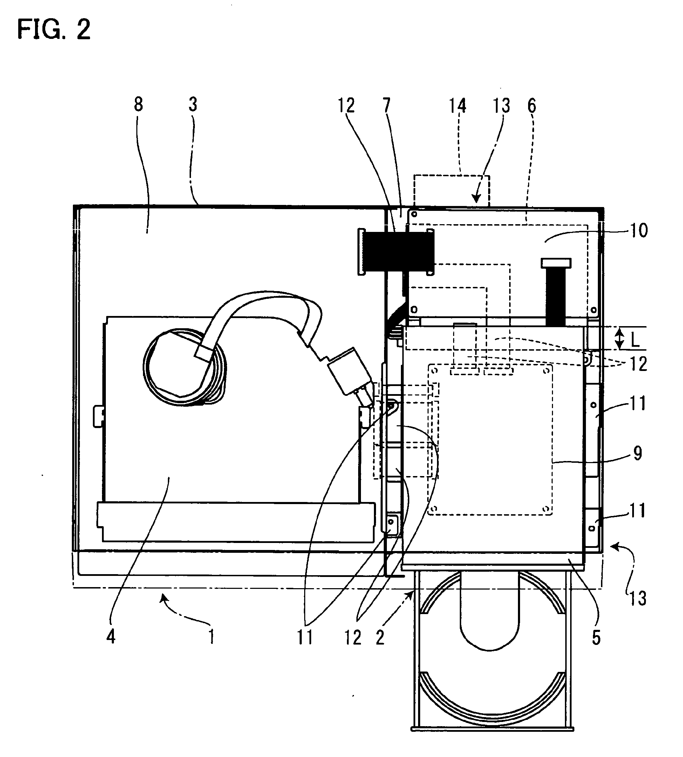

The present invention concerns how to lay out the main units and parts shown in FIG. 5 in the apparatus efficiently. FIG. 1 is a front layout drawing showing an internal structure of the combination recorder/player according to the present invention and FIG. 2 is a plan layout drawing showing the internal structure of the combination recorder/player according to the present invention, where reference number 3 denotes an enclosure which constitutes an outer shell. The VCR unit 4 is placed in an upper left front part in the enclosure 3, the DVD unit 5 is placed in an upper right front part in the enclosure 3, and the HDD unit 6 is placed in a lower right rear part in the enclosure 3. In so doing, the HDD unit 6 is placed sideways with a flank facing the front and with the HDD unit being separated from the enclosure's bottom face 7 by a gap.

The HDD unit 6 and DVD unit 5 partially face each other vertically at some distance, overlapping each other by a distance L (FIG. 2) with the front end of the HDD unit 6 (that side of the HDD unit 6 which is facing the front of the apparatus) located ahead of the rear end of the DVD unit 5. When viewed from above, the DVD unit 5 and HDD unit 6 overlap each other with part of the HDD unit 6 placed below the DVD unit 5. This can be done by placing the DVD unit 5 near the top of the enclosure 3, placing the digital signal processing board (MPEG board) 9 below it, placing the HDD unit 6 near the bottom face of the enclosure 3, and placing the PCB power board 10 above it. This allows the apparatus size to be reduced.

Although a front view of the apparatus is not shown in detail, a video cassette loading/ejection slot 1 is provided in an upper left part of the front face of the enclosure 3 and a DVD disk loading/ejection slot 2 is provided sideways almost at the same height in an upper right part of the front face.

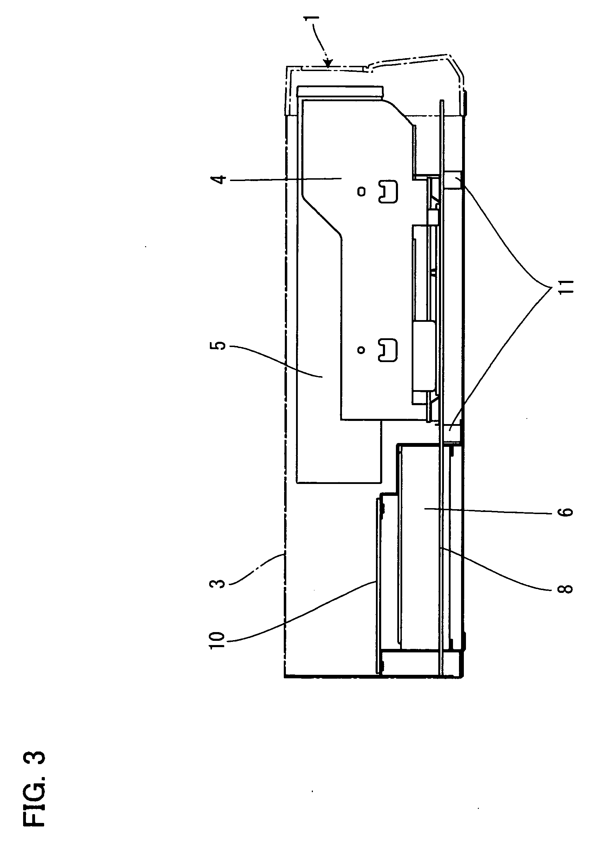

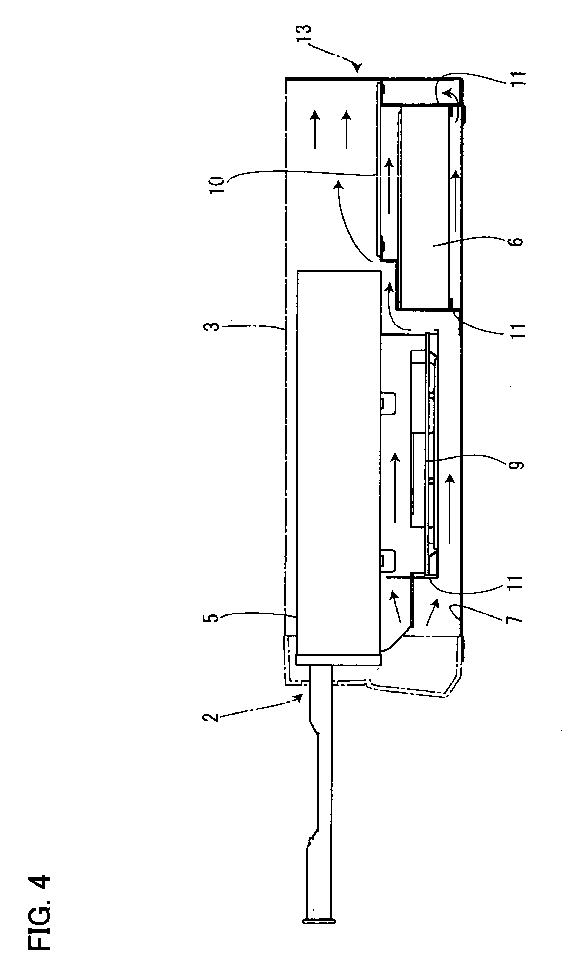

Referring to FIGS. 3 and 4, they clearly show a configuration in which the analog signal processing board 8 is placed under the VCR unit 4, the digital signal processing board 9 is placed below the DVD unit 5, being separated by a gap, and the PCB power board 10 is placed above the HDD unit 6, being separated by a gap. Thus, there is a gap between the digital signal processing board 9 and HDD unit 6 as well as between the DVD unit 5 and PCB power board 10. The gaps are provided to make it easier to dissipate heat generated by the units as well as to facilitate air flow by providing flow paths (indicated by arrows in FIG. 4) . Also, the digital signal processing board (MPEG board) 9 and PCB power board 10, which are major heat sources, are gathered closely to cool them efficiently by installing a fan nearby.

The units are placed with gaps among them using supporting members 11. In so doing, it is not that different units are supported by different supporting members 11. According to the present invention, the DVD unit 5 and digital signal processing board 9 placed below it are fastened together to the enclosure 3 by the same supporting members 11 (see FIG. 1). Also, the HDD unit 6 and PCB power board 10 are fastened together to the enclosure 3 by the same supporting members 11 (see FIG. 4) . Both in the case of the DVD unit 5 and HDD unit 6, supporting members 11 are installed on both sides.

The main purpose for fastening the HDD unit 6 a little away from the enclosure's bottom face 7 is to avoid unwanted shocks. The design in which the video cassette loading/ejection slot and DVD disk loading/ejection slot are arranged side by side at almost the same height gives impressions of balance and high perfection.

Regarding a method for wiring between various units and parts, the VCR unit 4 and analog signal processing board 8 are connected by signal wiring; the PCB power board 10 are connected with the analog signal processing board 8, DVD unit 5, and HDD unit 6 by respective power wiring 12; and the digital signal processing board 9 is connected with the analog signal processing board 8, DVD unit 5, and HDD unit 6 by respective signal wiring 12. The wiring 12 which connects the PCB power board 10 with the analog signal processing board 8, DVD unit 5, and HDD unit 6 consists of power cables. The wiring 12 which connects the digital signal processing board 9 with the DVD unit 5 and HDD unit 6 consists of digital signal transmission cables. The wiring 12 which connects the digital signal processing board 9 with the analog signal processing board 8 consists of a power cable, timer-microcomputer communications cable, and video/audio input/output cable. Adjacent ones of the above-mentioned parts are connected by the respective wiring 12 in a short distance. This can be achieved by placing the PCB power board 10 in an upper right rear part of the apparatus, placing the digital signal processing board 9 ahead of the PCB power board 10 and near the enclosure's bottom face 7 (in a lower right rear part of the apparatus), and placing the analog signal processing board 8 in a lower left part of the apparatus. An intermediate part of any wiring 12 does not touch the DVD unit 5.

To allow the heat generated by various units and parts in the enclosure 3 to escape, vents 13 which communicate the inside of the enclosure 3 with outside air are installed at least in a front part of the right flank and right part of the back face of the enclosure 3. Vents 13 may be installed at many desired locations of the enclosure as required. The vents 13 according to this embodiment have slits, but they may have holes or other patterns.

To install a fan 14 without increasing the depth of the apparatus, preferably vents 13 which communicate the inside of the enclosure 3 with outside air are installed at least in front part of the right flank and right part of the back face of the enclosure 3 and the vent 13 in the right part of the back face is outfitted with the fan 14.

The combination recorder/player set forth in claim 1 of the present invention is characterized in that: a DVD disk loading/ejection slot is provided in an upper part of the front face; the DVD unit is placed in an enclosure which constitutes an outer casing of the recorder/player; the HDD unit is placed sideways in a lower rear part with a flank facing the front and with the HDD unit being separated from an enclosure bottom by a gap; and the HDD unit and the DVD unit face each other vertically at some distance, partially overlapping each other with a front end of the HDD unit located ahead of a rear end of the DVD unit. With its capability to lay out the units efficiently, the present invention set forth in claim 1 and the like can keep the exterior size of the enclosure almost equal to that of a conventional combination recorder/player equipped with two recording/playback functions of a VCR unit and DVD unit even if the HDD unit is added.

Also, manufacturers can produce enclosures and assemble parts on conventional production lines and carry out various types of production using conventional manufacturing processes as they are. Consequently, when a user buys a combination recorder/player equipped with at least two recording/playback functions of a DVD unit, and HDD unit to replace a conventional combination recorder/player, the user can reuse an existing rack or other storage space to house the new apparatus.

With the combination recorder/player set forth in claim 2, i.e., the combination recorder/player according to claim 1, characterized in that a digital signal processing board is placed below the DVD unit, being separated by a gap, a PCB power board is placed above the HDD unit, being separated by a gap, and the digital signal processing board and the HDD unit as well as the DVD unit and the PCB power board stay clear of each other, being separated by gaps; it is possible to keep down the exterior size of the enclosure because parts can be laid out efficiently and there is no need to increase the depth even if the HDD unit is added.

With the combination recorder/player set forth in claim 3, i.e., the combination recorder/player according to claim 1 or 2, characterized in that the DVD unit and the digital signal processing board are supported together and fastened to the enclosure by a supporting member, and the HDD unit and the PCB power board are supported together and fastened to the enclosure by another supporting member; since the DVD unit and the digital signal processing board are fastened together by one supporting member, and the HDD unit and the PCB power board are fastened together by another supporting member, it is possible to reduce the required number of supporting members. Also, this method makes it easier to install parts. Even if an HDD unit is added to a combination recorder/player equipped with two recording/playback functions of a VCR unit and DVD unit, there is no need to add a new supporting member to fasten the HDD unit to the enclosure. This reduces part count, weight, and assembly time as well as the number of processes.

With the combination recorder/player set forth in claim 4, i.e., the combination recorder/player according to any of claims 1 to 3, characterized in that an analog signal processing board is placed in enclosure, the PCB power board is connected with the analog signal processing board, the DVD unit, and the HDD unit by respective power wiring, the digital signal processing board is connected with the analog signal processing board, the DVD unit, and the HDD unit by respective signal wiring, adjacent ones of the units are connected by respective wiring in a short distance, and an intermediate part of any wiring does not touch the DVD unit; since the PCB power board is placed on the right side, it is possible to reduce the length of the wiring, eliminating the need for complex add-on wiring. Also, since the digital signal processing board is installed below the DVD unit, the wiring does not touch the DVD unit midway, and thus wire breakage can be avoided.

With the combination recorder/player set forth in claim 5, i.e., the combination recorder/player according to any of claims 1 to 4, characterized in that vents which communicate the inside of the enclosure with outside air are installed at least in a front part of the flank and a back face of the enclosure, and the vent in the back face is outfitted with an exhaust fan; it is possible to provide space for heat dissipation among parts, create flow paths among the parts to facilitate passage of air, and ventilate air forcibly with a fan, thereby drawing in air through the vent in the front part of the flank, creating constant air flow around the DVD unit, digital signal processing board, HDD unit, and PCB power board, and discharging the removed heat through the vent in the back face, and cooling can be done efficiently in a concentrated manner.

## Claims

1. A combination recorder/player equipped with at least two recording/playback functions of a DVD unit, and HDD unit, **characterized in that**: a DVD disk loading/ejection slot is provided in an upper part of the front face; the DVD unit is placed in an enclosure which constitutes an outer casing of the recorder/player; the HDD unit is placed sideways in a lower rear part with a flank facing the front and with the HDD unit being separated from an enclosure bottom by a gap; and the HDD unit and the DVD unit face each other vertically at some distance, partially overlapping each other with a front end of the HDD unit located ahead of a rear end of the DVD unit.

2. The combination recorder/player according to claim 1, **characterized in that**: a digital signal processing board is placed below the DVD unit, being separated by a gap; a PCB power board is placed above the HDD unit, being separated by a gap; and the digital signal processing board and the HDD unit as well as the DVD unit and the PCB power board stay clear of each other, being separated by gaps.

3. The combination recorder/player according to claim 1 or 2, **characterized in that**: the DVD unit and the digital signal processing board are supported together and fastened to the enclosure by a supporting member; and the HDD unit and the PCB power board are supported together and fastened to the enclosure by another supporting member.

4. The combination recorder/player according to one of claims 1 to 3, **characterized in that**: an analog signal processing board is placed in the enclosure; the PCB power board is connected with the analog signal processing board, the DVD unit, and the HDD unit by respective power wiring; the digital signal processing board is connected with the analog signal processing board, the DVD unit, and the HDD unit by respective signal wiring; adjacent ones of the units are connected by respective wiring in a short distance; and an intermediate part of any wiring does not touch the DVD unit.

5. The combination recorder/player according to one of claims 1 to 4, **characterized in that**: vents which communicate the inside of the enclosure with outside air are installed at least in a front part of the flank and a back face of the enclosure; and the vent in the back face is outfitted with an exhaust fan.
